# FASCICULE DE BREVET EUROPEEN

(11) **EP 3 152 821 B1**
(45) Date de publication et mention de la délivrance du brevet: **22.11.2023**
(21) Numéro de dépôt: 15726148.8
(22) Date de dépôt: 02.06.2015
(51) Int. Cl.: H02P 6/16, H02K 11/215, H02K 29/06, H02P 6/08, H02K 7/06, H02K 11/00

(54) **ACTIONNEUR LINÉAIRE RÉVERSIBLE AUTO COMMUTÉ À COMMANDE BIFILAIRE**
SELBSTSCHALTENDER, UMKEHRBARER LINEARAKTOR MIT BIFILARER STEUERUNG
SELF-SWITCHING, REVERSIBLE LINEAR ACTUATOR HAVING BIFILAR CONTROL

(30) Priorité: 03.06.2014 FR 1455021
(43) Date de publication de la demande: 12.04.2017
(73) Titulaire: Sonceboz Automotive S.A., 2605 Sonceboz-Sombeval (CH)
(72) Inventeur: ANDRIEUX, Gaël, 2533 Evilard (CH); FOUCAUT, Antoine, 70190 Montarlot les Rioz (FR)
(74) Mandataire: IP Trust
(86) Numéro de dépôt international: PCT/EP2015/062205
(87) Numéro de publication internationale: WO 2015/185528

(56) Documents cités:
- JP-A- 2013 018 449
- US-A- 4 501 981
- US-A- 5 903 117

## Description

### DOMAINE TECHNIQUE DE L'INVENTION

La présente invention a trait au domaine des actionneurs électriques linéaires, par exemple pour le contrôle des débits de fluides circulant dans les moteurs thermiques automobiles, et plus particulièrement au domaine des actionneurs réversibles requérant une sécurité de retour en position de référence, fonction dite « fail-safe », pour maitriser le débit du fluide lors de coupure d'alimentation par la batterie. L'invention porte précisément sur un actionneur linéaire réversible auto commuté à commande bifilaire offrant des qualités de compacité, de force utile, d'endurance, de tenue en température et de coût meilleures que les actionneurs décrits dans l'état de l'art.

### ETAT DE LA TECHNIQUE ANTERIEURE

Nous connaissons déjà des vannes de dosage de fluide comportant un actionneur réversible composé de l'association d'un moteur ou motoréducteur à courant continu avec un système de transformation à came pour générer un mouvement linéaire et contrôler un débit de régulation en écartant plus ou moins une soupape de son siège. Ces combinaisons de l'état de l'art sont basées sur différentes solutions de moteurs ou motoréducteur :

Une première solution consiste à utiliser un moteur à courant continu à balais combiné à un réducteur à engrenages et un système de transformation à came pour générer le déplacement axial de la soupape comme par exemple décrit dans le brevet US20120285411. Cette première solution présente les avantages d'une réduction de mouvement importante et donc une réserve de force intéressante, d'une simplicité de sa commande au moyen d'une connexion bifilaire, l'absence d'autre organe électronique intelligent. Cette solution est intéressante en termes de cout et d'aptitude à travailler sous des températures élevées.

En revanche cette solution présente deux inconvénients majeurs liés à la commutation mécanique des signaux électriques, qui induisent une usure des balais et donc une durée de vie limitée, mais aussi des émissions électromagnétiques importantes qui perturbent les autres organes électroniques situés à proximité. Ces deux inconvénients sont de plus en plus pesants pour les nouvelles spécifications d'actionneur électrique pour automobile. D'une part les durées de vie demandées aux moteurs sont de plus en plus longues, et d'autre part la quantité et la proximité des actionneurs électriques dans les moteurs imposent de réduire les émissions électromagnétiques. Enfin, la configuration spatiale de la solution n'est pas très avantageuse car elle nécessite de placer le motoréducteur selon un axe perpendiculaire à l'axe de l'organe de sortie de l'actionneur, ce qui conduit à une intégration délicate sur le bloc moteur du véhicule.

Un second type de solution est basée sur un moteur couple, qui est une seconde forme de moteur à courant continu mais sans balais, lequel entraine un dispositif à came pour générer la translation d'une soupape comme par exemple décrit dans le brevet FR2978998. Cette solution présente les mêmes avantages de simplicité de pilotage liés à la commande bifilaire de la solution précédente puisqu'elle est aussi basée sur un moteur à courant continu, mais elle bénéficie en plus de l'absence de balais ce qui lui permet d'atteindre des durées de vie très élevées car il n'y a pas d'usure des balais en comparaison de la solution précédente. Au final cette solution est donc intéressante pour sa longévité et ses faibles émissions électromagnétiques dues à l'absence de balais, elle permet de travailler à haute température du fait de l'absence de composants électroniques intelligents et donc contraignants (coût), et enfin pour la simplicité du pilotage qui reste bifilaire.

En revanche, elle présente elle aussi les inconvénients d'être basée sur un actionneur à course limitée, qui interdit toute forme de réduction de mouvement en amont du système de transformation à came, ce qui la pénalise fortement au niveau des forces maximum atteignables. En effet, les forces obtenues sur cette seconde solution sont moitié moindre de celle obtenues avec la première famille de solutions pour un courant consommé plus élevé. Comme les actionneurs de la famille précédent, l'orientation perpendiculaire du moteur couple par rapport à l'organe de sortie, du fait de la transformation par galet came, conduit à une intégration délicate de l'actionneur.

Enfin, une troisième famille de solution connue pour ces actionneurs réversibles pour commande de vanne de régulation de fluide, consiste à utiliser un moteur polyphasé commuté électroniquement, appelé communément BLDC pour Brushless DC, qui correspond à un moteur polyphasé sans balais, dont la commutation électronique interne au dispositif de commande permet de piloter les signaux électriques dans les phases du stator, en fonction de la position du rotor, qui est mesurée par des capteurs magnéto sensibles. Ce moteur est associé à un système de transformation par vis écrou pour générer la translation de l'organe de commande de la vanne, selon un mouvement coaxial à celui du moteur. Dans ce cas le dispositif de commande est assez complexe puisqu'il travaille en boucle fermée, pour adapter les signaux envoyés au stator en fonction de la position réelle du rotor. Cette solution est décrite dans plusieurs brevets dont le brevet européen EP1481459.

Cette solution présente les avantages de ne pas avoir de balais et offre ainsi les mêmes valeurs sûres de longévité et de faible émissivité magnétique que la solution précédente, mais dispose en plus d'une réduction de mouvement suffisante pour atteindre des forces élevées similaires à celles obtenues avec les solutions de la première famille. Enfin, cette configuration est intéressante du point de vue de l'intégration car la nature coaxiale du mouvement de la vis centrale par rapport au stator du moteur conduit à une construction globalement axisymétrique qui facilite fortement son intégration sur un bloc moteur et permet des avantages de compacité globale de la solution.

En revanche cette solution impose l'utilisation d'une électronique de pilotage complexe intégrant une intelligence qui doit interpréter les informations du capteur de position du rotor pour piloter les phases du stator en conséquence. Cela a pour conséquence une solution couteuse et limitée en température car le microcontrôleur qui gère le pilotage du moteur est limité à 140°C ce qui est trop bas pour les nouvelles contraintes d'environnement des vannes sous capot automobile.

Le document JP2013018449A divulgue un actionneur comprenant : un arbre de sortie, un mécanisme de freinage électromagnétique, un mécanisme de mouvement linéaire pour convertir le mouvement rotatif de l'arbre de sortie en mouvement linéaire et communiquer un déplacement généré par le mouvement linéaire au mécanisme entraîné, un dispositif de commande qui calcule un signal de commande pour le moteur en ajoutant une valeur de correction d'un courant en fonction d'une vitesse de rotation de l'arbre de sortie à un courant traversant le moteur en fonction d'une poussée qui génère la charge.

**Le** document US5903117A divulgue un ensemble mécatronique pour entraîner un moteur sans balais d'instrument chirurgical, comprenant : une première connexion électrique pour recevoir un premier signal de commande de moteur et un deuxième signal de commande de moteur ayant une polarité opposée audit premier signal de commande de moteur pour générer un signal de direction et pour générer un signal de vitesse; des moyens de commande utilisant un contrôle en boucle fermé en mesurant la vitesse.

### EXPOSE DE L'INVENTION

La présente invention vise à pallier les inconvénients de l'état de la technique en réalisant une solution d'actionnement linéaire compacte utilisant un moteur sans balai piloté par un signal bifilaire via un ensemble simple de composants électroniques permettant l'utilisation en température élevée supérieure à 140°C.

Un autre objet de l'invention est de permettre une sortie linéaire dans l'axe de rotation du moteur sans balai grâce à l'utilisation d'un système de transformation de mouvement par vis, interne au rotor.

Un autre des objets de l'invention est de permettre le retour en position de sécurité (communément appelé fonction fail-safe) grâce à l'utilisation d'un ressort de rappel couplé à un réducteur de type planétaire.

Pour ce faire, la présente invention est basée sur un moteur polyphasé sans balais à commutation électronique, intégrant une transformation de mouvement à haut rendement et pouvant recevoir un dispositif de rappel en position de référence très compact, qui permet de proposer l'intégration de toutes les fonctions requises dans une construction coaxiale.

Le dispositif de réduction de mouvement par vis écrou, ou même par deux écrous et un double filetage inversé sur la vis, permet d'atteindre un facteur de réduction de mouvement important ainsi qu'un bon rendement pour atteindre une puissance de sortie élevée et une bonne réserve de force.

L'unité de commande, qui est basée sur une commande bifilaire provenant du pont de puissance pour alimenter les interrupteurs de puissance pilotés directement par les éléments magnéto-sensibles de lecture de position du rotor, conduit à un compromis intéressant entre une électronique d'auto commutation classique pour moteur sans balai et une commande de moteur à balais basique.

Cette solution électronique est à la fois performante et peu chère, et elle permet de travailler à haute température du fait de l'absence d'intelligence embarquée.

Enfin le couplage d'un réducteur planétaire et d'un ressort de torsion permet d'intégrer de façon très compacte une solution efficace de rappel en position de référence du moteur.

En effet, le réducteur permet de réduire la course angulaire du rotor, pouvant atteindre plusieurs tours, pour entrainer un moyeu sur une course limitée et faire travailler ainsi un ressort de torsion dans de bonne condition sans être pénalisé par les frictions parasites des spires qui apparaissent lorsque l'amplitude du mouvement angulaire est supérieure à 270°.

Le ressort de torsion est constitué de quelques enroulements de fil sur un diamètre qui se trouve autour du guidage du rotor et permet une intégration dans l'actionneur sans allonger ou grandir sa taille initiale. Cela permet également de conserver une construction coaxiale, plus facile à intégrer dans l'environnement moteur.

L'invention concerne selon son acception la plus générale un ensemble mécatronique pour l'entrainement linéaire d'un organe comprenant une unité de commande et un actionneur, l'unité de commande comprenant un algorithme d'asservissement et un pont de puissance, ledit algorithme pilotant ledit pont de puissance, le pont de puissance délivrant un signal électrique bifilaire composé d'un signal de couple et d'un signal de direction, l'actionneur comprenant un moteur électrique sans balai polyphasé à N phases, des sondes de détection binaires de la position du rotor dudit moteur, un dispositif de transformation du mouvement rotatif du rotor en un mouvement linéaire de l'organe de commande, des interrupteurs de puissance aptes à alimenter les N phases du moteur à partir du signal électrique bifilaire caractérisé en ce que l'état des interrupteurs de puissance est commandé directement par un signal issu des sondes de détection.

On entend par « commandé directement » le fait que les sondes de détection sont reliées électriquement aux interrupteurs de sortie et non pas à un microcontrôleur. Le signal électrique délivré aux interrupteurs est le signal de sortie des sondes de détection. Les seuls éventuels composants électriques interposés entre une sonde et un interrupteur sont des composants passifs telles qu'une résistance, un condensateur, ou une diode.

Avantageusement, le moteur polyphasé à N phases est constitué de N bobines unipolaires ou bipolaires, ou N*2 demi-bobines unipolaires.

Selon une variante, les sondes de détection binaires de la position du rotor sont alimentées par le signal électrique bifilaire.

Selon une autre variante, le dispositif de transformation de mouvement possède au moins un écrou lié au rotor du moteur et au moins une portion filetée liée à l'organe de commande de l'actionneur et en ce que le rotor entraine le dispositif de rappel en position au travers d'un réducteur planétaire.

Selon une autre variante, le dispositif de transformation de mouvement possède un écrou lié au rotor et un second écrou lié au boitier de stator, chacun collaborant avec deux portions de l'organe de commande possédant des filetages de sens opposés et en ce que le rotor entraine le dispositif de rappel en position au travers d'un réducteur planétaire.

Selon une autre variante, l'ensemble mécatronique comporte un capteur de position comprenant un aimant lié à l'organe de commande et un élément magnétosensible lié à l'unité de commande et en ce que l'élément magnétosensible est conçu apte à lire la position axiale de l'organe de commande.

Selon une autre variante, il comporte un capteur de position comprenant un aimant lié à l'organe de commande et un élément magnétosensible lié à l'unité de commande, et en ce que le motif d'aimantation de l'aimant est conçu apte à permettre la lecture de position axiale de l'organe de commande au cours de son déplacement hélicoïdal.

De préférence, cet ensemble comporte un capteur de position comprenant un aimant lié à l'organe de commande et un élément magnétosensible lié à l'unité de commande et en ce que le motif d'aimantation de l'aimant est axisymétrique.

L'invention concerne également un ensemble mécatronique pour l'entrainement linéaire d'un organe comprenant une unité de commande et un actionneur, l'unité de commande comprenant un algorithme d'asservissement et un pont de puissance, ledit algorithme pilotant ledit pont de puissance, le pont de puissance délivrant un signal électrique bifilaire composé d'un signal de couple et d'un signal de direction, l'actionneur comprenant un moteur électrique sans balai polyphasé à N phases, des sondes de détection binaires de la position du rotor dudit moteur, un dispositif de transformation du mouvement rotatif du rotor en un mouvement linéaire de l'organe de commande, un dispositif de rappel en position de référence comportant un ressort de torsion, des interrupteurs de puissance aptes à alimenter les N phases du moteur à partir du signal électrique bifilaire caractérisé en ce que l'état des interrupteurs de puissance est commandé directement par un signal issu des sondes de détection.

De préférence, le moteur polyphasé à N phases est constitué de N bobines unipolaires ou bipolaires, ou N*2 demi-bobines unipolaires.

Selon un mode de réalisation avantageux, les sondes de détection binaires de la position du rotor sont alimentées par le signal électrique bifilaire.

Avantageusement, le dispositif de transformation de mouvement possède au moins un écrou lié au rotor du moteur et au moins une portion filetée liée à l'organe de commande de l'actionneur et en ce que le rotor entraine le dispositif de rappel en position au travers d'un réducteur planétaire.

Selon une variante avantageuse, le dispositif de transformation de mouvement possède un écrou lié au rotor et un second écrou lié au boitier de stator, chacun collaborant avec deux portions de l'organe de commande possédant des filetages de sens opposés et en ce que le rotor entraine le dispositif de rappel en position au travers d'un réducteur planétaire.

Selon une autre variante, l'ensemble mécatronique selon l'invention comporte un capteur de position comprenant un aimant lié à l'organe de commande et un élément magnéto sensible lié à l'unité de commande et en ce que l'élément magnéto sensible est conçu apte à lire la position axiale de l'organe de commande.

De préférence, il comporte un capteur de position comprenant un aimant lié à l'organe de commande et un élément magnéto sensible lié à l'unité de commande, et en ce que le motif d'aimantation de l'aimant est conçu apte à permettre la lecture de position axiale de l'organe de commande au cours de son déplacement hélicoïdal.

Selon une autre variante, l'ensemble mécatronique comporte un capteur de position comprenant un aimant lié à l'organe de commande et un élément magnéto sensible lié à l'unité de commande et en ce que le motif d'aimantation de l'aimant est axisymétrique.

Avantageusement, l'axe d'enroulement du ressort de torsion est concentrique avec l'axe de rotation du moteur polyphasé

Selon une autre variante, la course angulaire du ressort de torsion (20) est limitée mécaniquement par une excroissance liée au ressort lui-même ou à l'un des éléments du réducteur planétaire (18) évoluant dans un espace circulaire limité.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- La figure 1, une architecture mécatronique typique utilisée pour le pilotage via une commande bifilaire d'un moteur selon l'invention ;
- la figure 2, le détail d'un circuit électronique rudimentaire pouvant être utilisé dans l'invention ;
- la figure 3a, un exemple de circuit électronique de logique de commutation suivant un premier mode « 120° unipolaire » ainsi que sa table de vérité ;
- la figure 3b, un exemple de circuit électronique de logique de commutation suivant un deuxième mode « 180° unipolaire » ainsi que sa table de vérité ;
- la figure 4, un exemple de circuit électronique de logique de commande avec sa table de vérité pour un mode de pilotage bipolaire dans un premier mode de réalisation ;
- la figure 5, un exemple de circuit électronique de logique de commande avec sa table de vérité pour un mode de pilotage bipolaire dans un deuxième mode de réalisation ;
- les figures 6a et 6b, un premier mode de réalisation de l'actionneur linéaire intégrant un système vis-écrou ;
- les figures 7a et 7b, un deuxième mode de réalisation de l'actionneur linéaire intégrant un système vis-écrou ainsi qu'un système de rappel en position de référence ;
- les figures 8a et 8b, une vue en coupe partielle et une vue de trois-quarts d'un ensemble motoréducteur selon l'invention utilisant un troisième mode de réalisation;
- les figures 9a et 9b, une vue en coupe partielle et une vue de trois-quarts d'un ensemble motoréducteur selon l'invention utilisant le troisième mode de réalisation des figures 8a et 8b.
- La figure 10a et 10b, suivant les modes de réalisation préférés des figures 8 et 9, la solution de rappel en position couplé à l'ensemble de réduction planétaire.

### DESCRIPTION DETAILLEE D'UN MODE DE REALISATION

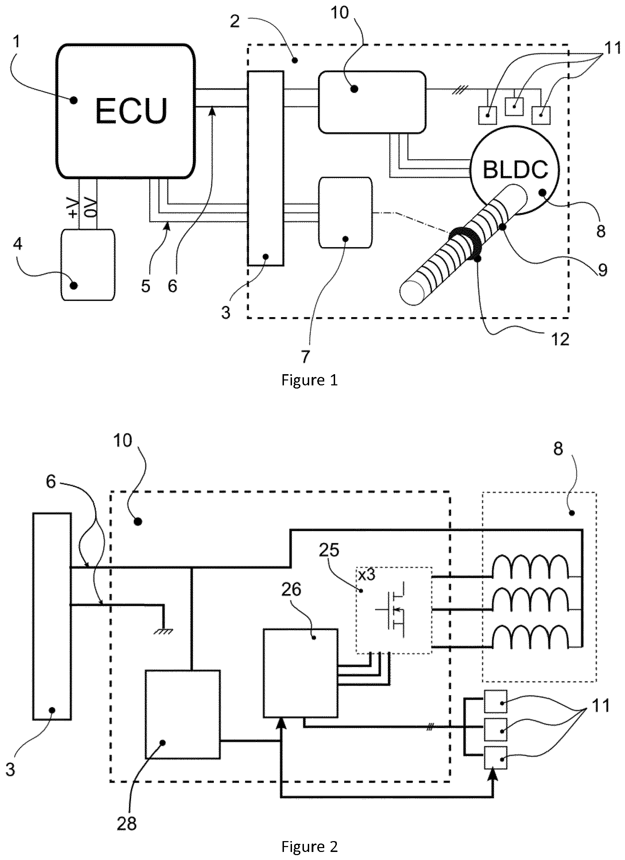

La figure 1 décrit un ensemble mécatronique selon l'invention composé d'une source d'énergie (4) alimentant une unité de commande (1) pilotant un actionneur (2) composé d'un moteur DC sans balai (8) associé à un ensemble mécanique de transformation mécanique (9) de la rotation en un déplacement linéaire, ensemble ici symbolisé sous la forme d'un système de type vis-écrou. Un capteur (7), accouplé à la sortie mécanique (12), ici l'écrou, de l'actionneur (2), retourne l'information de position (5) à l'unité de commande (1) qui agit sur les signaux de commande (6) regroupés dans un connecteur de liaison (3). La position du rotor du moteur (8) est lue à l'aide de N sondes (11) qui, par l'intermédiaire d'un circuit électronique rudimentaire (10), auto-commutent les N phases du moteur (8).

La figure 2 présente cette électronique rudimentaire (10) pouvant être utilisé dans l'invention. Elle se compose d'un ensemble de transistors de commande (25) directement pilotés par les signaux issus des sondes de Hall (11) détectant la position du rotor du moteur via une logique de commutation (26), composé d'éléments électroniques simples sans microprocesseur. Un régulateur de tension (28) permet d'utiliser le signal de commande bifilaire pour alimenter les sondes de Hall (11).

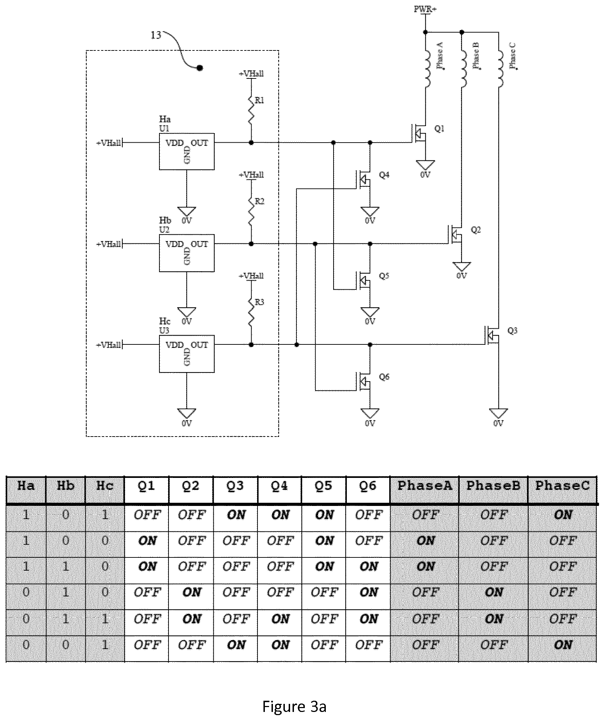

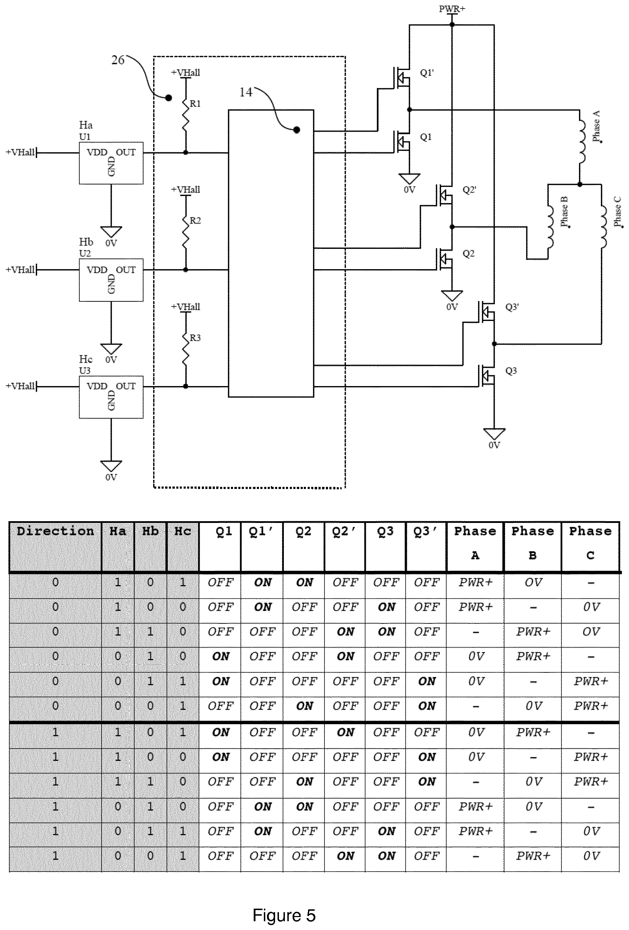

**En** figure 3a est présenté un exemple de commande dans le cas d'un premier mode de pilotage dit à « 120° » unipolaire d'un moteur triphasé câblé en étoile. La tension (PWR+) étant positive sur le point commun, le courant circule toujours dans le même sens dans les enroulements. La tension venant du régulateur de tension (28), issue de la commande bifilaire, alimente le bloc de détection (13) et les sondes de Hall (Ha, Hb, Hc). En fonction de la position du rotor, ces différentes sondes digitales sont en état bas (équivalent à une tension nulle) ou haut (tension de type 5V). En fonction de l'état des sondes, les différents transistors Q1 à Q6 sont ouverts ou fermé et permettent ainsi la circulation ou non du courant dans les différentes phases. Le mode de pilotage qu'il est possible d'obtenir avec l'exemple de la figure 5 est un mode de pilotage à 120°, c'est-à-dire que chacune des phases est alimentée pendant 120° électrique (un degré électrique étant égal à un degré mécanique multiplié par le nombre de paires de pôles de l'aimant du moteur).

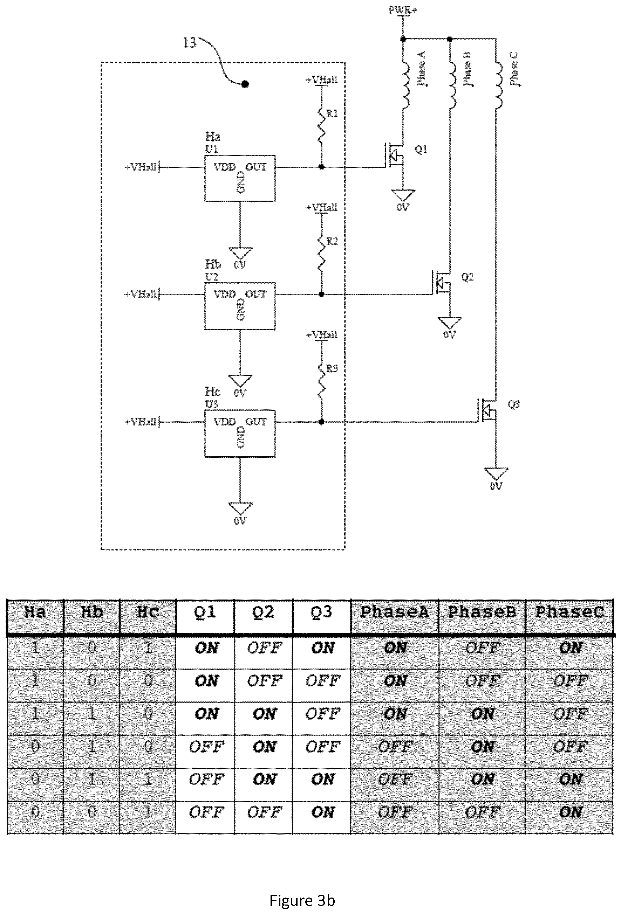

De la même manière, la figure 3b présente un exemple de pilotage dit « 180° » unipolaire. Les transistors Q1 à Q3 sont ouverts ou fermés en fonction de l'état des sondes de Hall, alimentées par le signal bifilaire régulé. Les transistors sont ouverts/fermés sur 180° électrique. Le choix de pilotage en mode 120° ou 180° peut être fait en fonction du nombre de transistors de commande autorisés ou du profil et niveau de couple souhaités du moteur.

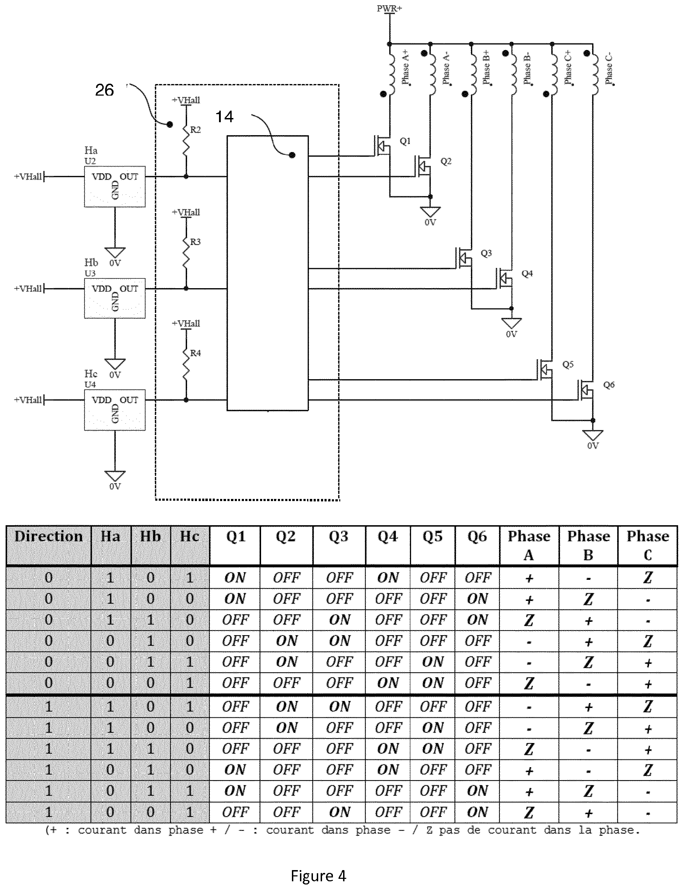

Il est possible de piloter le moteur en mode bipolaire (circulation du courant dans les deux sens dans chaque phase). Pour cela, il suffit de disposer de deux bobines distinctes par phase, chacune étant bobinée dans le sens inverse de l'autre. Ainsi, si l'on prend l'exemple de la figure 4 et de la phase A, la bobine A+ est bobinée dans le sens inverse à celui de la bobine A-. Lorsque le transistor Q1 est ouvert, et Q2 est fermé, le courant circule dans la phase A- et le champ magnétique dans la phase est orienté dans un premier sens. Au contraire, lorsque le transistor Q1 est fermé et Q2 est ouvert, le courant circule dans la phase A+ est le champ magnétique dans la phase est orienté dans un deuxième sens opposé au premier. Il en est de même pour les deux autres phases B et C de l'exemple de la figure 4. Pour séquencer correctement les ouvertures et fermetures des transistors Q1 à Q6, le bloc de logique de commutation (26) doit comporter une logique de commande (14) adaptée, composée d'éléments électroniques simples comme des portes logiques permettant de réaliser la table de vérité présentée. Le schéma électronique complet n'est pas montré par souci de clarté mais peut s'envisager facilement pour l'homme de métier.

Il est à noter qu'il est possible de réaliser une connexion bipolaire des bobines du moteur, comme explicité en figure 5 en gardant 6 transistors de puissance. La logique de commande (14) est adaptée à la table de vérité correspondante montrée en figure 5.

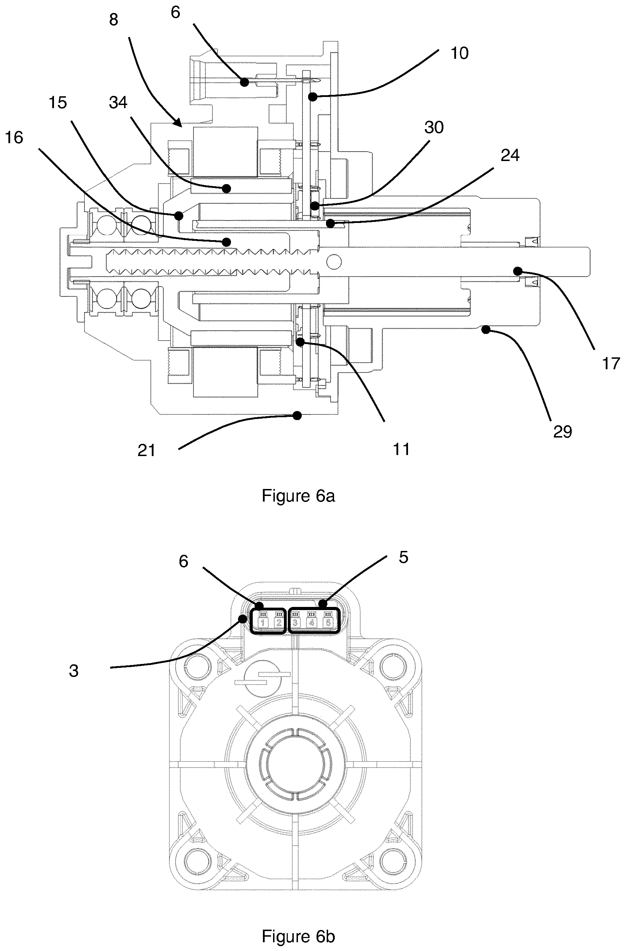

La figure 6a présente une vue en coupe d'un actionneur linéaire selon l'invention, qui comporte un moteur polyphasé sans balais (8), intégrant un rotor et un stator. Le boitier (21) du stator porte, sur sa face avant, un circuit électronique (10) comportant un dispositif de pilotage bifilaire tel que décrit précédemment. Le rotor (15) porte un aimant (34) prévu apte à exciter des sondes digitales (11) placées sur le circuit électronique (10), et intègre un écrou (16) dont la rotation provoque la translation de l'axe central (17) qui est bloqué en rotation au moyen d'une liaison glissière avec la flasque avant (29). Les sondes digitales (11) permettent, selon la logique de commande décrite précédemment, d'auto-commuter les phases du stator, et les broches liées aux signaux de commande (6) du moteur sont constituées de seulement deux fils d'alimentation électrique. Par ailleurs l'axe central (17) mobile en translation, porte un aimant (24) conçu apte à exciter un élément magnéto sensible (30) placé sur la face avant de la carte électronique (10), de façon à donner une information de position (5) (non visible en figure 6a mais uniquement en 6b) de cet organe de commande. Ce capteur, alimenté par deux fils d'alimentation séparés de ceux du moteur, délivre une information de position (5) de l'axe central (17) qui permet à une unité de commande externe à l'actionneur, de contrôler la position de l'axe central (17) en comparant sa position réelle à la position de consigne souhaitée. Comme illustré sur la figure 6b, l'actionneur possède un connecteur de liaison (3) comportant uniquement cinq connexions électriques : 2 de ces connexions constituent les signaux de commande (6) du moteur et les trois autres connexions constituent l'alimentation du capteur de position ainsi que son signal de sortie sous la forme d'une information de position (5).

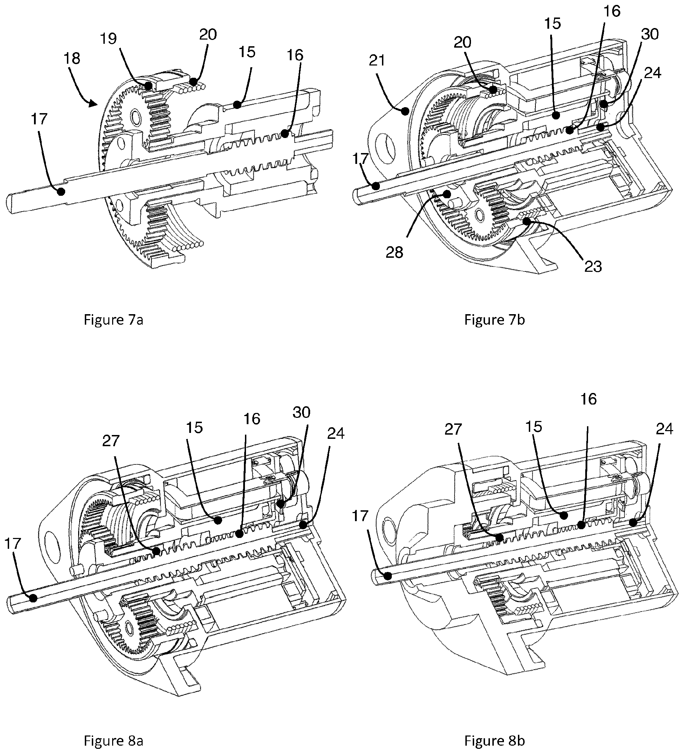

Les figures 7a, en vue isolée du rotor (15) avec un réducteur planétaire (18), et 7b, en vue coupée du moteur complet, montrent un second mode de réalisation de l'actionneur linéaire selon l'invention, dans lequel le rotor (15) du moteur polyphasé intègre un écrou (16) qui collabore d'une part avec une portion filetée de l'axe central (17) constituant l'organe de commande, et d'autre part avec un réducteur planétaire (18) constitué de 3 satellites situés autour du rotor (15) en entrainant une roue à denture intérieure (19) qui elle-même entraine le ressort de torsion (20).

L'axe central (17) est en liaison glissière avec le flasque avant (21) du boitier de l'actionneur de façon à ce que la rotation de l'écrou (16) du rotor (15) provoque la translation de l'axe central (17). La rotation du rotor (15) entraine le chargement du ressort de torsion (20) dont la course est limitée par la roue à denture intérieure (19), laquelle possède un ergot qui circule dans une encoche (non visible en figure 6b) liée au boitier de l'actionneur. L'amplitude du mouvement circulaire du ressort (20) est donc fortement réduite par rapport au mouvement du rotor (15) grâce à la réduction de ce réducteur planétaire (18) et permet une déformation faible du ressort (20) et évite ainsi les pertes par friction du ressort (20) sur son manchon de guidage (23). Le couple du rotor (15) est transformé en translation de l'organe de commande par la liaison vis/écrou qui transmet donc la puissance mécanique. Le réducteur planétaire peut être avantageusement réalisé en plastique car uniquement utilisé pour transmettre le couple de rappel emmagasiné dans le ressort de façon à garantir le retour en une position de référence de l'organe de commande de l'actionneur. Les pignons en plastique du réducteur ne transmettent donc pas la puissance mécanique utile en sortie d'actionneur mais un couple limité, calculé pour vaincre le couple magnétostatique du rotor (15) et assurer le retour en position de référence lorsque le moteur n'est plus alimenté. Un aimant (24) est lié à l'extrémité arrière de l'axe central (17) et collabore avec un élément magnétosensible (30), l'ensemble aimant (24) et élément magnétosensible (30) formant un capteur de position. L'élément magnétosensible (30) est lié au dispositif de commande du moteur, de façon à ce que le déplacement axial de l'organe de commande est lu et interprété par le dispositif de commande qui peut alors contrôler que le positionnement de l'organe de commande correspond à la position de consigne (fonctionnement en boucle fermée).

Les figures 8a et 8b montrent un troisième mode de réalisation dans lequel la transformation de mouvement est réalisée au moyen d'une solution de vis à double filetage opposé. Le rotor (15) possède un premier écrou (16) qui collabore avec une première portion filetée de l'axe central (17), alors qu'un second écrou (27) lié au bâti collabore avec une seconde portion filetée de l'axe central (17) dont le sens d'hélice est opposé à la première portion. Ainsi la rotation de l'écrou (16) lié au rotor, force l'axe central (17) à se visser dans le second écrou fixe (27), et à décrire ainsi un mouvement hélicoïdal. L'organe de commande de l'actionneur décrit donc une hélice et la forme de l'obturateur de la vanne lié à l'actionneur devra être conçu pour accepter cette composante de rotation lors du dosage de fluide.

Le capteur de position permettant de lire la position axiale de l'organe de commande est similaire à celui des figures 7a et 7b. Néanmoins il s'en distingue part le motif d'aimantation de l'aimant (24) qui doit être adapté au mouvement relatif de l'aimant (24) par rapport à l'élément magnétosensible (30) qui, dans ce second mode de réalisation, est hélicoïdal. Une solution préférentielle mais non limitative consiste à imprimer une aimantation axisymétrique (identique lors d'une rotation) sur l'aimant (24) de sorte que la rotation de l'organe de commande ne soit pas détecté par l'élément magnétosensible (30) formant le capteur.

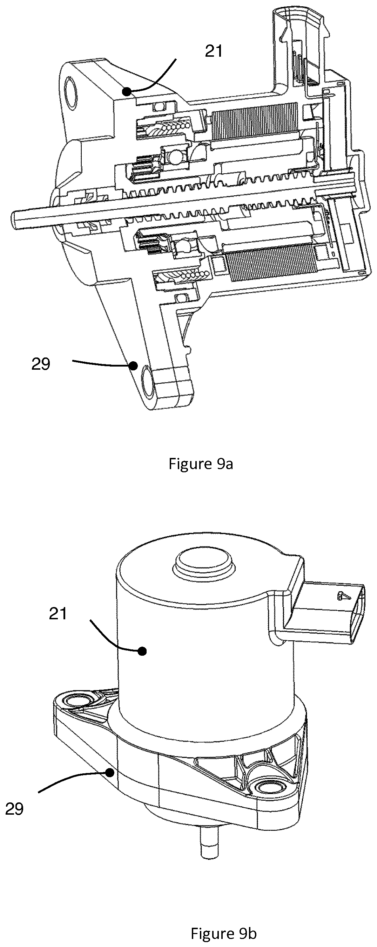

Les figures 9a et 9b présentent des vues en coupe et en perspective d'un actionneur selon le mode de réalisation des figures 8a et 8b. Ce mode de réalisation réunit le dispositif de commande par électronique simplifiée, la solution de transformation de mouvement par double hélice couplé à un capteur de position du mouvement hélicoïdal de l'organe de commande, et enfin un dispositif de rappel en position de référence par un ressort de torsion appliquant un couple de rappel sur le rotor au travers d'un réducteur planétaire distribué de façon coaxiale autour du rotor. Le boitier de l'actionneur est composé d'une part d'une enveloppe (21) surmoulée autour du stator et d'une flasque avant (29) séparés de sorte que l'on peut facilement modifier la partie avant de l'actionneur comportant le réducteur et le ressort, sans changement de la partie arrière comportant la partie moteur et l'électronique de pilotage.

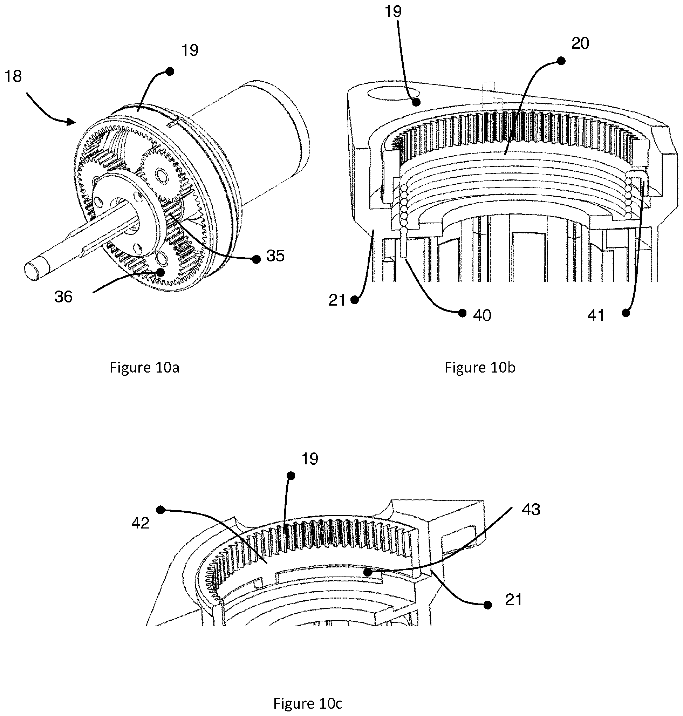

Les figures 10a, 10b et 10c détaillent la solution originale de rappel en position de référence, qui est basée sur la combinaison d'un ressort de torsion (20) avec un réducteur à engrenage de type planétaire (18). Le ressort (20) possède une accroche fixe (40) attachée sur le boitier du stator (21) et une accroche mobile (41) attachée à la couronne à denture intérieure (19), laquelle comporte un ergot (42), qui circule dans un chemin (43) de longueur limité réalisé dans le boitier du stator (21) de façon à permettre de pré-charger le ressort. La couronne à denture intérieure (19) est entrainée par trois pignons satellites (36), lesquels sont entrainés par le pignon central (35) solidaire du rotor (15). Le rapport de réduction entre le mouvement du rotor (15), pouvant atteindre plusieurs tours, et la couronne de réduction (19) est choisi de façon à limiter l'angle de travail du ressort (20) à une course réduite, de l'ordre de 180 à 270 degrés. De cette façon, les spires du ressort sont faiblement contraintes et permettent d'assurer une fonction de rappel avec un minimum de friction. Le réducteur planétaire (18) peut être réalisé avec des matières plastiques car il ne transmet que le couple du ressort, et non pas le couple utile du moteur qui est exploité en parallèle par le dispositif de transformation de mouvement.

## Revendications

1. Ensemble mécatronique pour l'entrainement linéaire d'un organe comprenant une unité de commande (1) et un actionneur (2),
l'unité de commande (1) comprenant un algorithme d'asservissement et un pont de puissance, ledit algorithme pilotant ledit pont de puissance, le pont de puissance délivrant un signal électrique bifilaire (6) composé d'un signal de couple et d'un signal de direction,
l'actionneur (2) comprenant un moteur électrique sans balai (8) polyphasé à N phases, des sondes (11) de détection binaires de la position du rotor dudit moteur (8), un dispositif de transformation du mouvement rotatif du rotor en un mouvement linéaire de l'organe de commande,
**caractérisé en ce que** l'actionneur est linéaire réversible auto commuté à commande bifilaire, l'actionneur comprenant des interrupteurs de puissance (25) aptes à alimenter les N phases du moteur (8) à partir du signal électrique bifilaire (6), l'état des interrupteurs de puissance (25) étant commandé directement par les signaux issus des sondes (11) de détection, qui sont reliées électriquement aux interrupteurs de puissance et les signaux électriques délivrés aux interrupteurs sont les signaux de sortie des sondes de détection, avec seuls composants électriques interposés entre une sonde et un interrupteur étant des composants passifs

2. Ensemble mécatronique selon la revendication 1 **caractérisé en ce que** le moteur (8) polyphasé à N phases est constitué de N bobines unipolaires ou bipolaires, ou N*2 demi-bobines unipolaires.

3. Ensemble mécatronique selon l'une des revendications 1 à 2 **caractérisé en ce que** les sondes (11) de détection binaires de la position du rotor (15) sont alimentées par le signal électrique bifilaire (6).

4. Ensemble mécatronique selon l'une des revendications 1 à 3 **caractérisé en ce que** le dispositif de transformation de mouvement (9) possède au moins un écrou (16) lié au rotor (15) du moteur et au moins une portion filetée liée à l'organe de commande de l'actionneur et **en ce que** le rotor entraine un dispositif de rappel en position au travers d'un réducteur planétaire (18).

5. Ensemble mécatronique selon l'une des revendications 1 à 3 **caractérisé en ce que** le dispositif de transformation de mouvement (9) possède un écrou (16) lié au rotor (15) et un second écrou (27) lié au boitier de stator, chacun collaborant avec deux portions de l'organe de commande possédant des filetages de sens opposés et **en ce que** le rotor (15) entraine le dispositif de rappel en position au travers d'un réducteur planétaire (18).

6. Ensemble mécatronique selon l'une des revendications 1 à 5 **caractérisé en ce qu'**il comporte un capteur de position comprenant un aimant (24) lié à l'organe de commande et un élément magnétosensible (30) lié à l'unité de commande et **en ce que** l'élément magnétosensible (30) est conçu apte à lire la position axiale de l'organe de commande.

7. Ensemble mécatronique selon la revendication 5 **caractérisé en ce qu'**il comporte un capteur de position comprenant un aimant (24) lié à l'organe de commande et un élément magnétosensible (30) lié à l'unité de commande, et **en ce que** le motif d'aimantation de l'aimant est conçu apte à permettre la lecture de position axiale de l'organe de commande au cours de son déplacement hélicoïdal.

8. Ensemble mécatronique selon la revendication 5 **caractérisé en ce qu'**il comporte un capteur de position comprenant un aimant (24) lié à l'organe de commande et un élément magnétosensible (30) lié à l'unité de commande et **en ce que** le motif d'aimantation de l'aimant (24) est axisymétrique.

9. Ensemble mécatronique selon l'une des revendications précédentes caractérisé en ce l'actionneur (2) comprend un dispositif de rappel en position de référence comportant un ressort de torsion.

10. Ensemble mécatronique selon l'une quelconque des revendications précédentes, **caractérisé en ce que** l'axe d'enroulement du ressort de torsion (20) est concentrique avec l'axe de rotation du moteur polyphasé

11. Ensemble mécatronique selon l'une quelconque des revendications précédentes, **caractérisé en ce que** la course angulaire du ressort de torsion (20) est limitée mécaniquement par une excroissance liée au ressort lui-même ou à l'un des éléments du réducteur planétaire (18) évoluant dans un espace circulaire limité.

## Patentansprüche

1. Mechatronische Baugruppe zum Linearantrieb eines Elements, umfassend eine Steuerungseinheit (1) und einen Aktuator (2),
wobei die Steuerungseinheit (1) einen Servoalgorithmus und eine Leistungsbrücke umfasst, wobei der Leistungsbrückenmodellalgorithmus ein elektrisches bifilares Signal (6) liefert, das aus einem Drehmomentsignal und einem Lenksignal besteht,
wobei der Aktuator (2) einen bürstenlosen Mehrphasen-Elektromotor (8) mit N Phasen, binäre Erfassungssonden (11) der Rotorposition des Motors (8), eine Vorrichtung zum Umwandeln der Drehbewegung des Rotors in eine linearen Bewegung des Steuerungselements umfasst,
**dadurch gekennzeichnet, dass** der Aktuator ein selbstschaltender, umkehrbarer Linearaktuator mit bifilarer Steuerung ist, wobei der Aktuator Leistungsschalter (25) umfasst, die in der Lage sind, die N Phasen des Motors (8) ausgehend vom elektrischen bifilaren Signal (6) zu versorgen, wobei der Zustand der Leistungsschalter (25) direkt durch die Signale von den Erfassungssonden (11) gesteuert wird, die elektrisch mit den Leistungsschaltern verbunden sind, und die an die Schalter gelieferten elektrischen Signale die Ausgangssignale der Erfassungssonden sind, wobei nur zwischen einer Sonde und einem Schalter zwischengeschaltete elektrische Komponenten passive Komponenten sind

2. Mechatronische Baugruppe nach Anspruch 1,
**dadurch gekennzeichnet, dass** ein Mehrphasenmotor (8) mit N Phasen aus N einpoligen oder mehrpoligen Spulen oder aus N*2 einpoligen Halbspulen besteht.

3. Mechatronische Baugruppe nach einem der Ansprüche 1 bis 2,
**dadurch gekennzeichnet, dass** die binären Erfassungssonden (11) der Rotorposition (15) durch das elektrische bifilare Signal (6) gespeist werden.

4. Mechatronische Baugruppe nach einem der Ansprüche 1 bis 3,
**dadurch gekennzeichnet, dass** die Bewegungsumwandlungsvorrichtung (9) mindestens eine Mutter (16), die mit dem Rotor (15) des Motors verbunden ist, und mindestens einen Gewindeabschnitt aufweist, der mit dem Steuerungselement des Aktuators verbunden ist, und dadurch, dass der Rotor eine Rückstellvorrichtung über ein Planetengetriebe (18) antreibt.

5. Mechatronische Baugruppe nach einem der Ansprüche 1 bis 3,
**dadurch gekennzeichnet, dass** die Bewegungsumwandlungsvorrichtung (9) eine Mutter (16), die mit dem Rotor (15) verbunden ist, und eine zweite Mutter (27) aufweist, die mit dem Statorgehäuse verbunden ist, wobei jede mit zwei Abschnitten des Steuerungselements verbunden ist, die Gewinde in entgegengesetzten Richtungen aufweisen, und dadurch, dass der Rotor (15) die Rückstellvorrichtung über ein Planetengetriebe (18) antreibt.

6. Mechatronische Baugruppe nach einem der Ansprüche 1 bis 5,
**dadurch gekennzeichnet, dass** sie einen Positionssensor aufweist, umfassend einen Magneten (24), der mit dem Steuerungselement verbunden ist, und ein magnetoempfindliches Element (30), das mit der Steuerungseinheit verbunden ist, und dadurch, dass das magnetoempfindliche Element (30) ausgestaltet ist, um die axiale Position des Steuerungselements lesen zu können.

7. Mechatronische Baugruppe nach Anspruch 5,
**dadurch gekennzeichnet, dass** sie einen Positionssensor aufweist, umfassend einen Magneten (24), der mit dem Steuerungselement verbunden ist, und ein magnetoempfindliches Element (30), das mit der Steuerungseinheit verbunden ist, und dadurch, dass das Magnetisierungsmuster des Magneten ausgestaltet ist, um eine axiale Position des Steuerungselements während seiner schneckenförmigen Bewegung zu ermöglichen.

8. Mechatronische Baugruppe nach Anspruch 5,
**dadurch gekennzeichnet, dass** sie einen Positionssensor aufweist, umfassend einen Magneten (24), der mit der Steuerung verbunden ist, und ein magnetoempfindliches Element (30), das mit der Steuerungseinheit verbunden ist, und dadurch, dass das Magnetisierungsmuster des Magneten (24) achsensymmetrisch ist.

9. Mechatronische Baugruppe nach einem der vorstehenden Ansprüche, **dadurch gekennzeichnet, dass** der Aktuator (2) eine Rückstellvorrichtung in einer Referenzposition aufweist, umfassend eine Torsionsfeder.

10. Mechatronische Baugruppe nach einem der vorstehenden Ansprüche, **dadurch gekennzeichnet, dass** die Wickelachse der Torsionsfeder (20) konzentrisch mit der Drehachse des Mehrphasenmotors ist

11. Mechatronische Baugruppe nach einem der vorstehenden Ansprüche, **dadurch gekennzeichnet, dass** der Winkelweg der Torsionsfeder (20) mechanisch durch einen Auswuchs begrenzt wird, der mit der Feder selbst oder mit einem der Elemente des Planetengetriebes (18) verbunden ist, die sich in einem begrenzten kreisförmigen Raum bewegen.

## Claims

1. Mechatronic assembly for linearly driving a member comprising a control unit (1) and an actuator (2),
the control unit (1) comprising a servo-control algorithm and a power bridge, said algorithm controlling said power bridge, the power bridge providing a bifilar electrical signal (6) consisting of a torque signal and a direction signal,
the actuator (2) comprising a multiphase, brushless electric motor (8) having N phases, binary sensors (11) for detecting the position of the rotor of said motor (8), and a device for transforming the rotary movement of the rotor into a linear movement of the control member,
**characterized in that** the actuator is linear, self-switching and reversible and has bifilar control, the actuator comprising power switches (25) which are suitable for supplying the N phases of the motor (8) from the bifilar electrical signal (6), the state of the power switches (25) being controlled directly by the signals from the detection sensors (11) which are electrically connected to the power switches, and the electrical signals delivered to the switches are the signals output from the detection sensors, with only electrical components placed between a sensor and a switch being passive components

2. Mechatronic assembly according to claim 1, **characterized in that** the multiphase motor (8) having N phases consists of N unipolar or bipolar coils or N*2 unipolar half-coils.

3. Mechatronic assembly according to either claim 1 or claim 2,
**characterized in that** the binary sensors (11) for detecting the position of the rotor (15) are powered by the bifilar electrical signal (6).

4. Mechatronic assembly according to any of claims 1 to 3,
**characterized in that** the movement transformation device (9) has at least one nut (16), which is connected to the rotor (15) of the motor, and at least one threaded portion, which is connected to the control member of the actuator, and **in that** the rotor drives a position-return device through a planetary reduction gear (18).

5. Mechatronic assembly according to any of claims 1 to 3,
**characterized in that** the movement transformation device (9) has a nut (16), which is connected to the rotor (15), and a second nut (27), which is connected to the stator housing, each collaborating with two portions of the control member having opposite threads, and **in that** the rotor (15) drives the position-return device through a planetary reduction gear (18).

6. Mechatronic assembly according to any of claims 1 to 5,
**characterized in that** it comprises a position detector comprising a magnet (24), which is connected to the control member, and a magneto-sensitive element (30), which is connected to the control unit, and **in that** the magneto-sensitive element (30) is designed to be suitable for reading the axial position of the control member.

7. Mechatronic assembly according to claim 5, **characterized in that** it comprises a position detector comprising a magnet (24), which is connected to the control member, and a magneto-sensitive element (30), which is connected to the control unit, and **in that** the magnetization pattern of the magnet is designed to be suitable for allowing the axial position of the control member to be read during its helical movement.

8. Mechatronic assembly according to claim 5, **characterized in that** it comprises a position detector comprising a magnet (24), which is connected to the control member, and a magneto-sensitive element (30), which is connected to the control unit, and **in that** the magnetization pattern of the magnet (24) is axisymmetrical.

9. Mechatronic assembly according to any of the preceding claims, **characterized in that** the actuator (2) comprises a reference position-return device comprising a torsion spring.

10. Mechatronic assembly according to any of the preceding claims, **characterized in that** the winding axis of the torsion spring (20) is concentric with the axis of rotation of the multiphase motor.

11. Mechatronic assembly according to any of the preceding claims, **characterized in that** the angular stroke of the torsion spring (20) is mechanically limited by a projection which is connected to the spring itself or to one of the elements of the planetary reduction gear (18) moving in a limited circular space.
